Europäisches Patentamt

European Patent Office

Office européen des brevets

(19)

(11) Publication number : **0 556 023 A1**

## (12) EUROPEAN PATENT APPLICATION

(21) Application number : **93300937.5**

(22) Date of filing : **09.02.93**

(51) Int. Cl.$^5$ : **C08L 83/04, C09D 183/04**

(30) Priority : **10.02.92 US 833180**

(43) Date of publication of application :
**18.08.93 Bulletin 93/33**

(84) Designated Contracting States :
**DE DK FR GB IT SE**

(71) Applicant : **GENERAL ELECTRIC COMPANY**
**1 River Road**
**Schenectady, NY 12345 (US)**

(72) Inventor : **Stein, Judith**
**1005 Union Street**
**Schenectady, New York 12308 (US)**

(74) Representative : **Pratt, Richard Wilson**
**London Patent Operation G.E. Technical**
**Services Co. Inc. Essex House 12/13 Essex**
**Street**
**London WC2R 3AA (GB)**

(54) Organopolysiloxane compositions.

(57)   Epoxy containing organic silicon materials, such as epoxy methylsiloxanes, have been found to be useful as anchorage additives for heat curable solventless addition cured paper release compositions resulting from platinum catalyzed hydrosilation of alkenyl siloxanes and silicon hydride siloxanes.

EP 0 556 023 A1

Cross Reference to Related Application

Reference is made to copending application, serial number 07/473,802, filed 2/2/90.

Background of the Invention

The present invention relates to solventless heat curable organopolysiloxane paper release compositions. More particularly, the present invention relates to the use of epoxy containing silicone monomers or polymers as anchorage additives for addition cured silicone paper release coating formulations.

Prior to the present invention as shown by Stein et al, U.S. Pat. No. 4,954,364, various paper release compositions were available and methods for coating substrates utilizing a UV curable epoxy silicone mixture comprising a major amount of an epoxy silicone, a controlled release additive, such as an alkyl phenol and a photo sensitive polyaryloniumhexafluorometalloid salt. Experience has shown that although paper release compositions can perform satisfactorily in combination with pressure sensitive adhesive tapes, it is often necessary to employ an anchorage additive in the paper release composition before it is cured. Otherwise, transfer or excessive separation of the paper release coating from the plastic or paper substrate can occur upon separation from a pressure sensitive adhesive (PSA) tape or other type of coated substrate particularly after the paper release coating has been in contact with the PSA over an extended shelf period.

Commercially available paper release coating compositions often contain a solvent and are based on an addition cure or a condensation cure. A typical anchorage additive for a solvent based condensation cure paper release coating composition is an acetoxy vinylglycidoxypropyl methoxy silicone polymer which is utilized in combination with 1% acetic anhydride. Additional commercially available anchorage additives used in a solvent based paper release coating composition is methyltriacetoxysilane, or a titanium tetraalkoxide. Although presently available anchorage additives have been found effective for minimizing separation of the paper release coating from the substrate surface after contact with the PSA after an extended shelf period, the release response from the PSA as measured in the force in grams over a 2 inch distance, is often unacceptable.

It would be desirable therefore to develop a solventless paper release coating composition which maintains an acceptable release response when it is cured on a plastic or paper substrate and contacted to the PSA over an extended shelf period and thereafter separated from the PSA without a significant physical loss or transfer of the release coating.

Summary of the Invention

The present invention is based on the discovery that epoxy containing silicone monomers and polymers can be used as anchorage additives in solventless heat curable silicone paper release compositions which are based on a platinum group metal catalyzed addition reaction. In addition, the resulting heat curable solventless paper release compositions have been found to be substantially free of odor, and hydrolyzable groups and release no corrosive or toxic by-products. In addition, the epoxy containing silicone anchorage additives can bind into the silicone network, do not result in an increase in extractables and do not interfere with the release performance of the coating. It is not completely understood why epoxy containing silicone monomers or polymers are effective as anchorage additives, while providing a satisfactory release response. A possible explanation is that the platinum group metal catalyst facilitates the cure of the epoxy into the silicone network in a manner which is totally different from a condensation cure.

Statement of the Invention

There is provided by the present invention heat curable, solventless organopolysiloxane compositions comprising by weight,
(A) 100 parts of an alkenyl siloxane,
(B) 1 to 20 parts of a silicon hydride siloxane,
(C) 0.1 to 5 parts of an epoxy functional silicone,
(D) an amount of a platinum group metal catalyst which is effective as a curing catalyst, and
(E) from about 0.1 to about 1% of an inhibitor based on the weight of (A), (B), (C), (D) and (E).

The alkenyl siloxane which can be used in the practice of the method of the present invention to produce the heat curable organopolysiloxane compositions is preferably an alkenyl-terminated polydiorganosiloxane having the formula,

$$R^1(R)_2SiO[(R)_2SiO]_m[R^1RSiO]_nSi(R)_2R^1 \quad (1)$$

wherein each R is independently an alkyl group having from 1 to about 10 carbon atoms or an aryl group, $R^1$

is an alkenyl group having from 1 to about 10 carbon atom, "m" is an integer equal to 1 to 300 inclusive, "n" is a whole number equal to 0 to 300, and m+n is equal to 1 to 600 and preferably 50 to 200.

R is more particularly methyl, ethyl, or-propyl, or an aryl group such as phenyl. Preferably R is methyl. $R^1$ is an alkenyl group such as vinyl, allyl, propenyl, or hexenyl. Preferably, $R^1$ is vinyl

The alkenyl siloxane of Formula (1) can be prepared by equilibrating octamethylcyclotetrasiloxane with a vinyl terminated low molecular weight polysiloxane chainstopper. However, if vinyl organosiloxy units are desired in the backbone, a predetermined amount of cyclic vinylorganosiloxane can be used in the equilibration mixture. The chainstopper is preferably a low molecular weight vinyl terminated organopolysiloxane, such as the corresponding disiloxane, trisiloxane, tetrasiloxane. These low molecular weight vinyl terminated polysiloxane polymers are produced by hydrolyzing the appropriate chlorosilanes particularly vinyldiorganochlorosilane along with diorganodichlorosilane to produce the desired vinyl chainstopped polydiorganosiloxanes. The equilibration catalyst which can be used is preferably a mild acid catalyst, such as toluenesulfonic acid or an acid treated clay. An alkali metal hydroxide as the catalyst such as potassium or sodium hydroxide also can be used as the equilibration catalyst. When the equilibration has proceeded to the point where about 85% of the cyclopolysiloxane has been converted to linear polymer, the acid catalyst can be neutralized or filtered out. Preferably, excess cyclics are stripped off so that the linear polymer will have a low volatile content.

The silicon hydride siloxane is an organohydrogenpolysiloxane having the general formula,

$$(R^2)_2HSiO(R^2HSiO)_a[(R^2)_2SiO]_bSiH\ (R^2)_2 \quad (2)$$

wherein each $R^2$ is independently an alkyl group having from 1 to about 10 carbon atom or an aryl group, a and b are whole numbers having a value in the range of from 1 to about 300; the silicon hydride siloxane has at least two silicon bonded hydrogen atoms per polysiloxane molecule, and no silicon atom has more than one silicon bonded hydrogen. The silicon hydride siloxane can have a viscosity of from 1 to 1000 centipoises at 25°C and from about 0.04 to 1.4 percent by weight hydrogen.

Examples of alkyl groups represented by $R^2$ in formula (2) above include methyl, ethyl, and propyl. An example of an aryl group represented by $R^2$ is phenyl. Preferably, at least 99.5 percent and most preferably 100 percent of all $R^2$ radicals are alkyl and most preferably methyl.

The silicon hydride siloxanes and their preparation are well known in the organosilicon polymer art and include commercially available materials. The preparation of the silicon hydride siloxanes can be accomplished by hydrolyzing silanes, such as chlorosilanes, and equilibrating the resulting hydrolyzate under acid catalysis. Alternatively, a mixture of suitable siloxanes, such as cyclic siloxanes and linear siloxanes, can be copolymerized and equilibrated under acid catalysis. For example, a hydride-stopped silicon fluid suitable for use in the present invention can be prepared by reacting tetramethyldisiloxane with octamethylcyclotetrasiloxane in a predetermined ratio in the presence of Filtrol-20 as catalyst for 4-6 hours at 80-100°C. The Filtrol-20 catalyst is then removed by filtration and the residual reactants are removed by vacuum striping.

The platinum group metal catalyst of the composition of the present invention is a catalyst which promotes the hydrosilation reaction. Useful catalysts for facilitating the hydrosilation curing reaction include precious metal catalysts such as those which use ruthenium, rhodium, palladium, osmium, iridium, and platinum, and complexes of these metals. Platinum or a complex thereof is preferred. Examples of suitable hydrosilation catalysts for use in the present invention are disclosed, for example, in U.S. Patent Nos. 3,159,601, and 3,159,662 (Ashby); 3,220,970 (Lamoreaux); 3,814,730 (Karstedt); 3,516,946 (Modic); and 4,029,629 (Jeram); all of the foregoing patents being hereby incorporated by reference herein.

Additional platinum catalysts which can be used in the practice of the present invention to effect addition between silicon hydride and olefinically unsaturated silicon materials are for example chloroplatinic acid, finely divided platinum metal, platinum metal on a carrier, such as carbon, as shown by Daly, U.S. Pat. No. 2,970,150, platinum catalyst as shown by Ashby, U.S. Pat. Nos. 3,159,601 and 3,159,662, Lamoreaux, U.S. Pat No. 3,220,972 and Karstedt, U.S. Pat. No. 3,775,452, and Lewis et al, U.S. Pat. No. 5,025,073, all of which are incorporated herein by reference.

An effective amount of platinum group metal catalyst which can be used in the heat curable organopolysiloxane composition is 5 ppm to 200 ppm of Pt, and preferably 10 ppm to 100 ppm based on the weight of heat curable organopolysiloxane mixture.

Inhibitors which can be used in the practice of the invention are dibutyl, dimethyl and diallyl maleate, methylbutynol, diethylacetylenedicarboxylate, and vinyl acetate.

The epoxy functional silicone or "anchorage additive" which can be used in the practice of the present invention can have a molecular weight in the range of from about 100 to about 5000. The anchorage additives are effective at about 0.5% to about 2% by weight based on the weight of the organopolysiloxane paper release composition. The anchorage additives are preferably an epoxy functional silicone resulting from the platinum group metal catalyzed addition between a silicon hydride siloxane, as previously defined, and an aliphatically unsaturated epoxy compound. Some of the aliphatically unsaturated epoxy compounds which can be used are vinylcyclohexene oxide, glycidy methacrylate and glycidyl allyl ether.

In order that those skilled in the will be better able to practice the present invention the following examples are given by way of illustration and not by way of limitation. All parts are by weight unless otherwise indicated.

Example 1

An anchorage additive in the form of an epoxy functional silicone was prepared by adding 157g of 3-vinyl-7-oxabicyclo (4.1.0.)heptane in a dropwise manner to a mixture heated to 80°C which consisted of 1,000g of a silicon hydride siloxane containing approximately 3 silicon methyl hydride siloxy units per 20 silicon dimethyl siloxy units, 500g of toluene and 2g of 5% platinum on finely divided carbon. The reaction was monitored by $^1$HNMR and IR and after all of the epoxide had been hydrosilylated, the epoxy functional silicone was filtered and stripped under vacuum to 95% solids. Based on method of preparation there was obtained an epoxy functional silicone or "epoxy (1)".

A second epoxy functional silicone was prepared by slowly adding 17g of tetramethyldisiloxane to a reaction mixture maintained below 30°C consisting of 150 ml of hexane, 32g of 3-vinyl-7-oxabicyclo(4.1.0.)heptane and 0.1 ml of a platinum catalyst shown by Lamoreaux, U.S. Pat. No.3,220,972. The reaction mixture was refluxed for 1/2 hour after the addition had been completed. The hexane was removed in vacuo and the resulting product filtered. Based on method of preparation there was obtained epoxy functional silicone or "epoxy (2)". Bis(glycidoxypropyl)-tetramethyldisiloxane, a commercially available epoxy functional silicone is referred to hereinafter as "epoxy 3".

Heat curable organopolysiloxane compositions useful as paper release coating compositions were prepared by adding 0.5 to 2% by weight of the above described epoxy functional silicones, epoxy (1), epoxy (2) and epoxy (3) as anchorage additives to coating formulations consisting of 4,000g of a methylvinylpolydimethylsiloxane having terminal dimethylvinylsiloxy units and methylvinylsiloxy units in the backbone having a viscosity of 450 centipoise, and containing 100 ppm of a platinum catalyst disclosed by Ashby, U.S. Pat. No.3,159,601, and 160g of a silicon hydride siloxane having a viscosity of 25 centipoise consisting essentially of condensed methylhydrogensiloxy units and terminated with dimethylhydrogensiloxy units and 0.25% based on total weight of heat curable organopolysiloxane composition of diallyl maleate as an inhibitor. The resulting curable formulations were then coated onto SCK paper at a speed of 100 feet/min. using a differential offset gravure roll and cured in a three zone oven at 290°F, 340°F and 351°F. The cured samples were then placed on a plate in a sealed jar containing two inches of water and placed in a 150°F oven and periodically examined for rub-off. Rub-off was performed manually by periodically applying a uniform finger pressure to the surface of the cured release coating after the coating had been exposed to moisture at elevated temperatures under sealed conditions as described above for 15 to 135 hours. A small amount of physical separation of the resin from the paper surface indicated slight rub-off "SRO". A substantial separation of resin from the paper is referred to hereinafter as "Rub-Off".

The coated paper samples were then laminated to a styrene-butadiene rubber adhesive (SBR) and aged for 3 weeks at 150°C. Release testing for peel was performed at 180°C at a speed of 300 feet/min. The same procedure was repeated except that in place of epoxy 1, epoxy 2, and epoxy 3, certain commercially available anchorage additives were used, such as Syl-Off 29F, an acetoxy vinylglycidoxypropyl methoxy silicone polymer with 1% acetic anhydride, and a solution of methyltriacetoxysilane in acetone and toluene referred to below as "acetoxy". The following results were obtained:

EP 0 556 023 A1

## Table 1

| | Rub-Off (Hrs.) | Release Force (g/2")** |
|---|---|---|
| Control | 40 | 20-30 |
| " + 1% epoxy 1 | 135* | 20-30 |
| " +1% epoxy 3 | 69 | 20-30 |
| " +0.5% epoxy 2 | 72 | 29-30 |
| " +0.5%(BuO)$_4$Ti | 15 | - |
| " +0.5% acetoxy | 15 | - |
| " +1% Syl-Off 29F | 135 | 200 |

*Sample showed slight rub-off (SRO)
**Samples aged for 3 weeks at 150°F

The above results show that epoxy 1, 2, and 3 have an acceptable release response and substantially increase rub-off resistance. However, Syl-Off 29F shows an unacceptable release response.

Example 2

Heat curable organopolysiloxane paper release compositions were prepared by adding 1-2% of anchorage additives epoxy (1) and epoxy (2) of example 1 to a control mixture of 2400g of a vinylsiloxane consisting essentially of condensed dimethylsiloxy units, methylvinylsiloxy units and chain terminated with dimethylvinylsiloxy units having a viscosity of about 4000 centipoises, 1600g of a controlled released additive (CRA) in the form of a methylpolysiloxane consisting essentially of about 40% by weight of a resin consisting of dimethylvinylsiloxy units, methylvinylsiloxy units and tetrasiloxy units having approximately 2.6% of C$_2$H$_3$ groups and 60% by weight of a vinyl siloxane fluid consisting essentially of dimethylvinyl terminal siloxy units condensed with dimethylsiloxy units and methylvinylsiloxy units, 200g of a silicon hydride siloxane having a viscosity of 25 centipoise and consisting essentially of condensed dimethylhydrogensiloxy units and methylhydrogensiloxy units and 100 ppm of platinum in the form of a catalyst shown by Lamoreaux, U.S. Pat. No. 3,220,972 and about 0.5% of butyl allyl maleate as an inhibitor. The resulting formulations were then applied onto SCK paper as described in example (1) and then evaluated for rub-off and release response. The following results were obtained where "SRO" means slight rub-off:

## Table 2

| | | Release Force (g/2")* | | | |
|---|---|---|---|---|---|
| | Rub-Off (Hrs.) | Initial | 1Wk | 2Wks | 3Wks |
| Control | 22 | 60 | 60 | 60 | 60 |
| Control 2% Wt.epoxy 1 | 22 | 66 | 60 | 78 | 102 |
| Control +1% Wt.epoxy 2 | SRO 46 | 55 | 60 | 55 | 72 |
| | SRO 147 | - | - | - | - |
| Control +2% Wt.epoxy 2 | SRO 75 | 52 | 61 | 51 | 76 |
| | SRO 147 | - | - | - | - |

*Samples aged at 150°F

The above results show that epoxy 1 and 2 are satisfactory anchorage additives.
Although the above examples are directed to only of the very many variables which can be used in the

5

EP 0 556 023 A1

release coating compositions of the present invention, it should be understood that the present invention is directed to a much broader variety of anchorage additive vinyl siloxanes and silicon hydride fluid as set forth in the description preceding these examples.

**Claims**

1. A curable, solventless organopolysiloxane composition comprising by weight,
   (A) 100 parts of an alkenyl siloxane,
   (B) 1 to 20 parts of a silicon hydride siloxane,
   (C) 0.1 to 5 parts of an epoxy functional silicone,
   (D) an amount of a platinum group metal catalyst which is effective as a curing catalyst, and
   (E) from about 0.1 to about 1% of an inhibitor based on the weight of (A), (B), (C), (D) and (E).

2. A heat curable composition in accordance with Claim 1, where the alkenylsiloxane is a vinylmethylsiloxane.

3. A heat curable composition in accordance with Claim 1 or Claim 2, where the silicon hydride siloxane is a silicon hydride methylsiloxane.

4. A heat curable composition in accordance with any one of Claims 1 to 3, where the epoxy functional silicone is an epoxy substituted methylpolysiloxane.

5. A heat curable composition in accordance with any one of Claims 1 to 3, where the epoxy functional silicone is an epoxy substituted disiloxane.

6. A heat curable composition in accordance with any preceding claim, where the inhibitor is diallyl maleate.

7. A heat curable composition in accordance with any preceding claim, where the curing catalyst is a platinum catalyst.

6

**European Patent Office**

# EUROPEAN SEARCH REPORT

Application Number

EP 93 30 0937

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DATABASE WPIL<br>Week 8748, 3 February 1988<br>Derwent Publications Ltd., London, GB;<br>AN 87-337153<br>& JP-A-62 240 363 (SHINETSU CHEM. IND. K.K.) 21 October 1987<br>* abstract * | 1-7 | C08L83/04<br>C09D183/04 |
| Y | GB-A-2 048 915 (GENERAL ELECTRIC COMPANY)<br>* claims 1,2,4-12,14-24 * | 1-7 | |
| X | DE-A-3 930 797 (FUJI PHOTO FILM CO., LTD. & SHIN-ETSU CHEMICAL CO., LTD.)<br>* claims 1-8,10 * | 1-3,7 | |
| | | | **TECHNICAL FIELDS SEARCHED (Int. Cl.5)**<br><br>C08L<br>C09D<br>C09J<br>D21H |

The present search report has been drawn up for all claims

| Place of search | Date of completion of the search | Examiner |
|---|---|---|
| THE HAGUE | 18 MAY 1993 | HOLLENDER C.J.F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)